# EUROPEAN PATENT SPECIFICATION

(11) **EP 2 269 464 B1**
(45) Date of publication and mention of the grant of the patent: **06.03.2013**
(21) Application number: 10164958.0
(22) Date of filing: 04.06.2010
(51) Int. Cl.: A21D 2/18, A21D 6/00, A23L 1/0522, A23L 1/29, A21D 13/06

(54) **Gluten-free bakery products**
Glutenfreie Backwaren
Produits de boulangerie sans gluten

(30) Priority: 05.06.2009 US 184445 P; 10.05.2010 US 776580
(43) Date of publication of application: 05.01.2011
(73) Proprietor: Brunob II B.V., 6824 BM Arnhem (NL)
(72) Inventor: Paulus, Jeanne, Bridgewater, NJ 08807 (US); Perez-Gonzalez, Alejandro J., Hillsborough, NJ 08844 (US); Dar, Yadunandan L., Somerset, NJ 08873 (US); Kulkarni, Rajendra, Overland Park, KS 66221 (US)
(74) Representative: Meissner, Bolte & Partner

(56) References cited:
- EP-A2- 0 035 978
- DE-U1- 29 704 037
- US-A1- 2006 222 740
- DATABASE WPI Section Ch, Week 200466 Thomson Scientific, London, GB; Class D11, AN 2004-677310 XP002595870 & JP 2004 267144 A (KATO S) 30 September 2004 (2004-09-30)
- DATABASE WPI Week 200512 Thomson Scientific, London, GB; AN 2005-105980 XP002595871 & JP 2005 021024 A (HINOMOTO KOKUFUN KK) 27 January 2005 (2005-01-27)
- "Dietetic bread prepn. - involves use of additional rice flour as starch-contg. component and milk-protein ppte. as structurising component premixed with water before use" DERWENT, 1 July 1988 (1988-07-01), XP002218875
- C.Brites et al.: "Maize-Based Gluten-Free Bread: Influence of Processing Parameters on Sensory and Instrumental Quality" Food and Bioprocess TechnologyAn International Journal 2 July 2008 (2008-07-02), pages 1-14, XP002595872 DOI: 10.1007/s11947-008-0108-4 Retrieved from the Internet: URL:http://www.springerlink.com/content/f0 60150xj6pt3163/fulltext.html [retrieved on 2010-08-10]
- Expandex: "Expandex Modified Tapioca Starch" 22 August 2008 (2008-08-22), pages 1-1, XP002595873 Retrieved from the Internet: URL:http://web.archive.org/web/20080822101 635/http://expandexglutenfree.com/product- information/ [retrieved on 2010-08-10]
- Expandex: "Gluten-Free White Bread" 27 March 2007 (2007-03-27), pages 1-1, XP002595874 Retrieved from the Internet: URL:http://web.archive.org/web/20070327183 324/expandexglutenfree.com/downloads/recip es/white-bread-recipe.pdf [retrieved on 2010-08-10]
- Mintel/ GNPD: "Gluten-free Cookies" 1 January 2000 (2000-01-01), pages 1-1, XP002595875 Retrieved from the Internet: URL:http://www.gnpd.com/sinatra/gnpd/searc h_results/&s_sort=2&item_id=10077117 [retrieved on 2010-08-09]
- Mintel/ GNPD: "Double Chocolate Cake Bars" 1 February 2002 (2002-02-01), pages 1-1, XP002595876 Retrieved from the Internet: URL:http://www.gnpd.com/sinatra/gnpd/searc h_results/&s_sort=2&p_page_number=1&p_page _size=30&item_id=138392 [retrieved on 2010-08-09]
- JAMES N. BEMILLER, ROY L. WHISTLER: 'Starch, Chemistry and Technology', FOOD SCIENCE AND TECHNOLOGY, INTERNATIONAL SERIES pages 320 - 322
- TESTER R F ET AL: "Annealing of starch - a review", INTERNATIONAL JOURNAL OF BIOLOGICAL MACROMOLECULES, ELSEVIER BV, NL, vol. 27, no. 1, 16 March 2000 (2000-03-16) , pages 1-12, XP027286661, ISSN: 0141-8130 [retrieved on 2000-03-16]
- MIYAZAKI M ET AL: "Effect of heat-moisture treated maize starch on the properties of dough and bread", FOOD RESEARCH INTERNATIONAL, ELSEVIER APPLIED SCIENCE, BARKING, GB, vol. 38, no. 4, 1 May 2005 (2005-05-01), pages 369-376, XP004778900, ISSN: 0963-9969, DOI: 10.1016/J.FOODRES.2004.10.015
- KATO S: "Preparation of bread, involves mixing preset amount of rice flour with water, heating, mixing viscous slurry with seasoning, water, rice flour and yeast to obtain bread dough, fermenting dough and baking fermented material", WPI / THOMSON,, vol. 2004, no. 66, 23 September 2004 (2004-09-23), XP002595870,

## Description

### FIELD OF THE INVENTION

This invention relates to gluten-free bakery products containing heat-moisture treated flour.

### BACKGROUND OF THE INVENTION

Flours are an important and major component of the diet, which are used to provide a multitude of functional aspects to a variety of food products. However, some individuals cannot consume certain flours because they are allergic or cannot easily digest gluten.

Gluten is a protein found in grains including wheat, oats, barley, and rye. In baked products, gluten forms the backbone of the viscoelastic matrix of the dough, which becomes a firm yet flexible structure upon baking. This matrix has desirable and typical qualities such as absence of crumbliness and cohesiveness in the mouth.

Wheat flour, which can be high in gluten, can be substituted with other gluten-free flours for baking, such as rice flour. Other commercially available gluten-free baked goods substitute wheat flour with starches, such as cornstarch.

For example, JP 2004 0267144A describes the preparation of bread involving mixing 4-8 mass parts of rice flour obtained from non-glutinous rice with water, gelatinizing starch in rice flour to produce a viscous slurry by heating the obtained mixture and mixing the obtained viscous slurry with seasoning, water, rice flour and yeast to obtain a bread dough, fermenting the dough and baking the fermented material to produce food products such as bread, noodles, cakes.

JP 2005-105980 discloses products based on gluten-substituted components such as rice flour which involves a hydrolyzing rice, glutinous rice powder and/or rice flour, steam kneading, shearing the obtained mixture in an extruder and grinding.

In "Dietetic Bread Preparation - involves use of additional rice flour as starch contg. component and milk ppte. as structurising component premixed with water before use", Derwent, 1 July 1988, the preparation of gluten-free bread based on rice flour as the starch-containing component is described which involves the use of a milk protein co-precipitate as a structurizing component the manufactured dietetic bread.

EP 0 035 978 discloses a process for the production of gluten-free breads which involves an amylaceous mixture formed by maize starch (50%) and a potato flour (50%) in addition to further ingredients such as saccharose, whole cow milk, lard, yeast, water and salt.

C. Brites et al., "Maize-based Gluten-free Bread: Influence of Processing Parameters on Sensory and Instrumental Quality", Food and Bioprocess Technology, an International Journal, July 02, 2008, pages 1 to 14, describes compositions based on maize flour in addition to sugar, salt and yeast to provide a gluten-free food product.

US 2006/0222740 A1 discloses food products based on rice flour, pre-gelatinized rice starch and modified rice starch among other conventional ingredients. In the modified rice starch, the modification is either chemical crosslinking or ether- or esterification of the starch.

Finally, DE 297 04 037 U1 discloses gluten-free food products based on rice swelling flour, corn flour, rice flour and locust-bean flour. From among these flours, the swelling flour is prepared by physically modification to pre-gelatinize the starch.

However, these gluten-free baked goods lack the structure and texture typical of gluten-containing baked goods.

In particular, in M. Miyasaki et al., "*Effect of heat-moisture treated maize starch on the properties of dough and bread*", the influence of heat-moisture treated maize starch which is known to be gluten-free, on dough and bread properties when used to replace part of the wheat flour was investigated. It was found that the sensory properties of the final baked breads could not be improved by the replacement and were even negatively affected compared to the control or when native maize starch was used.

There are also difficulties in using gluten-free flours or starches related to their processing characteristics; to form a gluten-free dough, frequently an increase in the amount of water is needed, resulting in stickiness. Also, the resulting dough has less flexibility as it is more sensitive to holding times within the production process than its gluten-containing counterpart.

It is known to use guar gum, xanthan gum and/or modified starch in gluten-free baked products as dough binder alternatives in those products. Further, modified starches are used as expansion and structuring aids in gluten-free products such as bread. However, these gums and modified starches often do not provide the structure, texture, and expansion demanded to be similar to gluten-containing foods, and furthermore, require a sacrifice of taste, texture and/or appearance of the final product as compared to those gluten-containing foods.

Despite the numerous ingredients and combinations of ingredients used as flour and/or starch replacers in preparing gluten-free bakery products, there remains a need for a product which functions in a way that enables manufactured gluten-free baked goods to more closely resemble the conventional, wheat flour containing bakery products in texture. The ability to use gluten-free ingredients in conventional baking processes without the need for modified or specialized processes is also important.

### SUMMARY OF THE INVENTION

It has now been discovered that a heat moisture treated flour can be used in bakery products to provide a product which more closely mimics the conventional, wheat flour containing products than other gluten-free products.

As used herein, the term bakery product is intended to mean those products typically found in a bakery, whether baked, fried, steamed or otherwise cooked, and include without limitation breads and bread products, cakes, cookies, donuts, and the like.

As used herein, the term gluten-free product is intended to mean those products containing less than 20 ppm gluten (w/w basis).

As used herein, the term high amylopectin is intended to mean containing at least about 90% amylopectin by weight of the starch or starch portion of the flour.

As used herein, the term high amylose is intended to mean containing at least about 27% amylose for wheat or rice and at least about 50% amylose for other sources, by weight of the starch or starch portion of the flour. The percent amylose (and therefore amylopectin) is determined by using the potentiometric method.

As used herein, dough is intended to mean a mixture of the flour component and other ingredients firm enough to knead, roll or form. In addition, it also refers to the cohesive product that results from the mixture of the flour component and water along with possibly fats and other usual ingredients normally entering the composition of a usual dough such as salt, yeast or chemical leavening agents, egg products, milk products and sugar.

As used herein, fat is intended to include both fat and oil.

As used herein, granular is intended to mean that the starches have the intact structure of a native starch granule, but their Maltese cross (under polarized light) is less defined or even absent due to compromised crystallinity.

As used herein, clean labeled is intended to mean that the ingredients do not include modified food starch, as currently defined by the U.S. Food and Drug Administration.

As used herein, the flour component is intended to mean all the flour and starch ingredients in the product.

### DETAILED DESCRIPTION OF THE INVENTION

This invention pertains to a gluten-free bakery product which comprises a flour component comprising a heat moisture treated flour. Such bakery products more closely mimic the conventional, wheat flour containing products than other gluten-free products.

The flours used in preparing the present invention may be derived from native sources. Native, as used herein, is one as it is found in nature. Also suitable are flours derived from a plant obtained by standard breeding techniques including crossbreeding, translocation, inversion, transformation or any other method of gene or chromosome engineering to include variations thereof. In addition, flours derived from a plant grown from induced mutations and variations of the above generic composition which may be produced by known standard methods of mutation breeding are also suitable herein.

Typical sources for the flours of this invention are cereals, tubers, roots, legumes and fruits. The native source can include corn (maize), pea, potato, sweet potato, garbanzo beans, banana, barley, wheat, rice (including brown rice), sago, oat, amaranth, tapioca, arrowroot, canna, quinoa, or sorghum, as well as high amylopectin or high amylose varieties thereof. However, if a gluten-containing source is used, the gluten must be removed to an extent sufficient to obtain the gluten-free compositions of the invention. In one embodiment, the native source is selected from the group consisting of rice, tapioca, corn, potato, oat, amaranth, and sorghum.

Flours suitable in the present invention may be derived from the plant material by any method used in the art of manufacturing flours and starches. In one embodiment, the flours are derived by dry milling. However, other methods, including combinations of wet and dry milling techniques may be used.

In one embodiment, the flour will contain 8-25% moisture, 1-50% protein, 0.1-8% fat (lipids), 1-50% fiber, 20-90% starch, 0-3% ash and optionally, other components such as nutrients (e.g. vitamins and minerals). The particle size may be varied as may the percents of the components using methods known in the art. For example, fine grinding and air classification may be used to alter the protein content. Flour is intended to include, without limitation, white flour, wholemeal flour, and wholegrain flour.

Heat-moisture treatment is a technical term used in starch chemistry to define the treatment of starch granules under specific moisture conditions and temperatures. In this regard, for example the textbook "Starch, Chemistry and Technology" by James BeMiller and Roy Whistler, 3^{rd} edition on page 320 through 322 describe typical heat-moisture treatment parameters of 90 to 100°C at a moisture content of 18-27% with conditioning periods between 12 and 16 hours. Similar parameters are described in R. F. Tester et al., Int. J. Biol. Macromolecules, 27 (2000), pages 1 to 12, which identifies a water content below 35% (w/w), temperatures of about 100°C (up to 16 h at 27% moisture) for the heat-moisture treatment.

Heat moisture treated flour is known in the art and is, for example, commercially available from National Starch LLC (Bridgewater, New Jersey, USA). The heat moisture treated flour may be prepared by any process known in the art to produce such flours. One such process follows.

In one suitable process, it is necessary that the starting flour have a specified amount of water or moisture content and is heated to a defined temperature in order to accomplish the goal of enhanced process tolerance and solution stability. The total moisture or water content of the starch to be heat treated will be in the range of from 10 to 50%, and in one embodiment will be in the range of 15 to 30%, by weight of the dry flour (dry solids basis, dsb). In another suitable embodiment, the level of moisture is substantially maintained during the heating step, such that it does not change by more than 5% (±5%). This may be accomplished, for example, by heat treating the flour in a sealed vessel to avoid water evaporation and/or by preconditioning the air circulating through the heating vessel. In another embodiment, the heat treatment has a drying effect and reduces the moisture content of the flour during processing, but not outside the above-stated moisture range.

The flour with specified moisture content is heated to a target temperature of from 100 to 180°C, and in one aspect from 100 to 120°C. It is important that the starch of the flour remain in the granular state. Other changes may occur, including denaturation of the protein. The time of heating can vary depending on the composition of the flour, including the starch and protein content, the particle size distribution, the amylose content of the starch component, and the level of enhancement desired as well as the amount of moisture and the heating temperature. In one embodiment, the heating time at target temperature will be from about 1 to 150 minutes, and in another embodiment from about 30 to 120 minutes.

The heat moisture treatment may be conducted using any equipment known in the art which provides sufficient capabilities for such treatment, particularly those which are enabled for powder processing, moisture addition and/or moisture control, mixing, heating and drying. The heat treatment may be done as a batch or a continuous process. In one embodiment, the equipment is a batch ploughshare mixer. In another embodiment, the equipment is a continuous solid-liquid mixer followed by a continuous heated conveyer screw. In yet another embodiment, the continuous process uses a tubular thin film dryer by itself or in combination with a continuous screw to extend and control the residence time. Any system used may be pressurized to control the moisture content at target temperatures at or above 100°C.

The conditions for treating the flour must be such that the granular structure of the starch within the flour is not destroyed. The granules must still be birefringent and there must be evidence of a Maltese cross when the granular structure of the starch is viewed under polarized light. Under some conditions, such as at high moisture and high temperature, the starch granule may be partially swollen but the crystallinity is not completely destroyed. Accordingly, the term 'granular starch' as used herein, means a starch which predominantly retains its granular structure (native granules) and has some crystallinity, and the granules may be birefringent and the Maltese cross may be evident under polar light. Further, the denaturing effect of the heat-moisture treatment on the protein component may have an impact on the observed functionality of the flour. The resulting product which has been heat treated will still have granular structure and will be birefringent when viewed under the microscope and have a Maltese cross when viewed under polarized light.

After the heat moisture treatment, the flour may be allowed to air dry to reach equilibrium moisture conditions or may be dried using a flash dryer or other drying means, such as spray drying, freeze-drying, or drum drying. In one embodiment, the flour is air dried or flash dried. The pH of the flour may also be adjusted and is typically adjusted to between 6.0 and 7.5.

The heat moisture treated flour of the present invention may be used in an amount effective to produce an organoleptically acceptable gluten-free bakery product. In one embodiment, the flour or flour mixture (hereinafter "flour") is used in the range of 2-95% (w/w) based on the gluten-free bakery product.

In one particularly suitable embodiment, the heat moisture treated flour is derived from a gluten-free grain and in another embodiment is rice flour.

In another embodiment, the gluten-free bakery product further contains either heat moisture treated or native tapioca flour and/or starch, which are known in the art and are, for example, commercially available from National Starch LLC (Bridgewater, New Jersey, USA). Hereinafter, tapioca starch or tapioca flour will be referred to as tapioca flour.

The ratio of heat moisture treated flour to tapioca flour (native or heat-moisture treated) is from 98:2 to 2:98 (w/w), in another embodiment is from 95:5 to 5:95 (w/w), in yet another embodiment is from 90:10 to 10:90 (w/w), and in still yet another embodiment is from 85:15 to 15:85 (w/w).

The flour/starch component may contain other flours and/or starches to provide further desired organoleptic qualities, such as thermally inhibited starches and flours, inhibited potato starches, inhibited corn starches, inhibited tapioca starches, cold water swellable starches, and/or octenylsuccinic anhydride substituted starch.

The thermally inhibited starch of the present invention may be used in an amount effective to produce an organoleptically acceptable gluten-free bakery product, and in one aspect of the invention is used in an amount of from 5 to 100 % (w/w) based upon the amount of the heat moisture treated flour. The thermally inhibited starch typically is used to modify organoleptic properties, and in one instance is used as a dough conditioner and/or viscosity modifier. Such viscosity modifiers are commonly used in the trade to help thicken the dough or batter, enabling its further processing into finished products such as cookies, muffins, pancakes, cakes, and other baked goods. It is also used to modify chewiness, gumminess, moistness, crispness, and other organoleptic qualities of the food product.

Such thermally inhibited starches and flours may prepared by any process known in the art. Thermally inhibited starches and flours (hereinafter "starches") are known in the art: see for example WO 95/04082, WO 96/40794, U.S. Patent Nos. 5,932,017 and 6,261,376, and U.S. Serial No.12/423,213. One such thermal inhibition process follows.

The starch may be adjusted before, after, and/or during the dehydration step, if necessary, to a pH level effective to maintain the pH at neutral (range of pH values around 7, from about pH of 6 to 8) or basic pH (alkali) during the subsequent thermal inhibition step. Such adjustment is known in the art, including methods of pH adjustment, types of buffers and alkalis used, and pH levels suitable.

The starch is dehydrated to anhydrous or substantially anhydrous conditions. As used herein, the term "substantially anhydrous" is intended to mean less than 5%, in one embodiment less than 2% and in yet another embodiment less than 1 % (w/w) water. The dehydration step to remove moisture and obtain a substantially anhydrous starch may be accomplished by any means known in the art and includes thermal methods, and non-thermal methods. Non-thermal methods would include using a hydrophilic solvent such as an alcohol (e.g. ethanol), freeze drying, or using a desiccant. Non-thermal dehydration may contribute to improvement of the taste of the thermally-inhibited polysaccharides.

Thermal methods of dehydration are also known in the art and are accomplished using a heating device for a time and elevated temperature sufficient to reduce the moisture content to that desired. In one embodiment, the temperature used is 125°C or less. In another embodiment, the temperature will range from 100 to 140°C. While the dehydration temperature can be lower than 100°C, a temperature of at least 100°C will be more effective in removing moisture when using a thermal method. The dehydration step may be conducted using any process or combination of processes and is typically conducted in an apparatus fitted with a means for moisture removal (e.g. a blower to sweep gas from the head-space of the apparatus, fluidizing gas) to substantially prevent moisture from accumulating and/or precipitating onto the starch. The time and temperature combination for the dehydration will depend upon the equipment used and may also be affected by the type of starch being treated, the pH and moisture content, and other factors identified and selected by the practitioner.

The thermal inhibition step is performed by heating the substantially anhydrous starch at a temperature of 100°C or greater for a time sufficient to inhibit the starch. In one aspect of the invention, the starch is substantially anhydrous before reaching heat treatment temperatures, and in another aspect of the invention the starch is substantially anhydrous throughout at least ninety percent of the heat treatment.

The heat treatment may be conducted over a range of temperatures of at least 100°C. In one embodiment, the temperature will range from 100 to 200°C, in another embodiment from 120 to 180°C and in yet another embodiment from 150 to 170°C. The time for thermal inhibition in one embodiment is from 0 to 12 hours, in another embodiment is from 0.25 to 6 hours and in yet another embodiment is from 0.5 to 2 hours. The time for thermal inhibition is measured from the time the temperature stabilizes (the target temperature is reached) and therefore the thermal inhibition time may be zero if thermal inhibition occurs while such temperature is being reached. For example, if conducting the process in an apparatus which has a comparatively slow temperature ramp-up, once the starch has reached substantially anhydrous conditions, thermal inhibition will begin if the temperature is sufficiently high and may be complete before the apparatus reaches final temperature.

The dehydrating and/or heat treatment steps may be performed at normal pressures, under vacuum or under pressure, and may be accomplished using any means known in the art. In one method, the gas used is pre-dried to remove any moisture. In another embodiment, at least one of these steps is carried out under increased pressure and/or under increased effective oxygen concentration.

The time and temperature combination for the dehydration and thermal inhibition steps will depend upon the equipment used and may also be affected by the type of starch being treated, the pH and moisture content, and other factors identified and selected by the practitioner.

In one aspect of this invention, the thermally inhibited starch is selected from the group consisting of rice starch, tapioca starch, corn starch, and potato starch.

In one aspect of the invention, inhibited potato starches are added in an amount of from 10-100% (w/w) of the heat moisture treated flour. Such inhibited potato starches are produced from native potato starches. Inhibition may be by any method including without limitation chemical crosslinking and thermal inhibition. Chemical crosslinking is well known in the art as described for example in Modified Starches: Properties and Uses, Ed. Wurzburg, CRC Press, Inc., Florida (1986). In one embodiment, the starch is crosslinked using at least one reagent selected from sodium trimetaphosphate (STMP), sodium tripolyphosphate (STPP), phosphorous oxychloride, epihydrochlorohydrin, and adipic-acetic anhydride (1:4) using methods known in the art. In another embodiment of the invention in which the flour/starch component is clean labeled, and in a further embodiment in which the bakery product is clean labeled, inhibition of the potato starch is by thermal inhibition.

In another aspect of the invention, inhibited tapioca starches are added in an amount of from 5-100% (w/w) of the heat moisture treated flour. Such inhibited tapioca starches are produced from native tapioca starches. Inhibition may be by any method including without limitation chemical crosslinking and thermal inhibition.

In another aspect of the invention, the inhibited starch is an octenylsuccinic anhydride (OSA) substituted starch which may be used to produce an organoleptically acceptable gluten-free bakery product. In one aspect of the invention, the OSA starch is used in an amount of from 1 to 50 % (w/w) based upon the amount of the heat moisture treated flour. Such OSA starches are produced from waxy maize, dent corn, or tapioca starches. Suitable levels of OSA modification are by addition of the OSA reagent in the amount of from 0.5 to 3% (w/w), and in one embodiment in an amount of 2 to 3% (w/w), based on the starch. The starch is modified with octenyl succinic anhydride using methods known in the art. Exemplary processes for preparing OSA starches known in the art and are disclosed, for example in U.S. Patent Application 2005/0008761 and Wurzburg (ibid). Other alkenyl succinic anhydrides, such as dodecenyl succinic anhydrides, may also be used.

In another aspect of the invention, cold water swellable starch is added in an amount of from 2 to 100% (w/w) and in yet another aspect in an amount of from 5 to 100% (w/w), based upon the heat moisture treated flour. Such cold water swellable cornstarch is known in the art and is otherwise known as pregelatinized starch. The cold water swellable starches of the present invention may be either granular or non-granular.

Granular pregelatinized starches have retained their granular structure but lost their Maltese crosses under polarized light. They are pregelatinized in such a way that a majority of the starch granules are swollen, but remain intact. Exemplary processes for preparing pregelatinized granular starches known in the art and are disclosed for examples in U.S. Pat. Nos. 4,280,851; 4,465,702; 5,037,929; and 5,149,799.

Pregelatinized non-granular starches and flours have also lost their Maltese crosses under polarized light and have become so swollen that the starches have lost their granular structure and broken into fragments. They can be prepared according to any of the known physical, chemical or thermal pregelatinization processes that destroy starch granules which include without limitation drum drying, extrusion, and jet-cooking.

In one treatment for making the starch cold water swellable, the starch may be pregelatinized by simultaneous cooking and spray drying such as disclosed in U.S. Pat. No. 5,149,799. Conventional procedures for pregelatinizing starch are known to those skilled in the art are also described for example in Chapter XXII- "Production and Use of Pregelatinized Starch", Starch: Chemistry and Technology, Vol. III-Industrial Aspects, R. L. Whistler and E. F. Paschall, Editors, Academic Press, New York 1967.

In one aspect of the invention, an optional bulking agent is used in the flour. This bulking agent can be any starch or flour added at a level that it does not significantly alter the texture imparted to the product by the heat moisture treated flour. In one embodiment of the invention, the optional bulking agent is native rice flour. In another embodiment of the invention, the bulking agent is used at a level of 20% (w/w) or less and in a further embodiment at a level of 15% (w/w) or less of the heat moisture treated flour in the formulation. In yet another embodiment of the invention, the bulking agent is used at a level of less than 10% (w/w) and in still yet another embodiment at a level of less than 5% (w/w) of the bakery product.

In one embodiment of the invention, the flour component of the bakery product consists essentially of the heat moisture treated flour and the native tapioca flour and in another consists essentially of the heat moisture treated rice flour and the native tapioca flour. In yet another embodiment, the flour component of the bakery product does not contain any starch or flour other than the heat moisture treated rice flour and the native tapioca flour.

The bakery product of this invention contains from 1% to 99% (w/w) of the flour/starch component and in another embodiment from 5% to 95% (w/w) of the flour/starch component.

The bakery products of this invention also contain at least one other conventional bakery product ingredient, such as eggs, milk, water, sugar, fats (shortening), chocolate, leavening agents, yeast, salt, emulsifier, and flavorings. Such conventional ingredients are well known in the art modify taste, texture, smell, appearance, keeping properties, workability, cooking properties, nutritional balance and the like. In one embodiment, the bakery products of this invention are clean label; that is, they do not contain any chemically modified ingredients or ingredients produced using genetically modified organisms. The bakery products do not contain any starch or flour other than the flour component.

In one embodiment, the bakery product contains less than 3% gum, in another embodiment less than 1.0% gum, in yet another embodiment less than 0.5% gum all on a weight/weight basis and in still another embodiment no gum.

In one embodiment of the invention, the flour component, in combination with the other optional ingredient(s), is capable of forming a dough, such as a bread dough, cake dough, cookie dough or biscuit dough. Such dough is capable of containing air cells produced by any leavening agent, and may be processed using conventional methods available to wheat products, for instance, mixed, fermented, scaled, molded, proofed and cooked (eg baked, fried, steamed etc.) like conventional gluten containing products. In one embodiment of the invention, the bakery product is a baked product.

The bakery products of this invention are gluten free, containing less than 20 ppm gluten (weight/weight basis).

The bakery products of this invention have improved organoleptic properties compared to other gluten-free bakery products and in one aspect of the invention are substantially the same as gluten containing bakery products. In particular, the bakery products of this invention have improved textural and structural attributes. In one embodiment of the invention, the graininess of the bakery product is less than 8.5 and in one embodiment is less than 7 as measured using the test set forth in the Examples section. In another embodiment of the invention, the cohesiveness of the bakery product is at least 5, in one embodiment is greater than 6, in another embodiment is greater than 7, and in yet another embodiment is greater than 8.5 as measured using the test set forth in the Examples section.

The bakery product of the present invention include without limitation breads, rolls, buns, bagels, toasts, crackers, pizza crust, brownies, croissants, pastries, croutons, wafers, rolls, biscuits, cookies, cakes, pie crusts, muffins, donuts, tortillas, waffles, pancakes, pretzels, sheeted baked snacks, pound cakes, and wraps. The bakery product is also intended to include mixes useful to prepare bakery products, and shelf-stable, or refrigerated, and frozen bakery products.

### EMBODIMENTS

1. A composition comprising a flour component comprising
   a) at least one heat-moisture treated flour wherein the granular structure of the starch within the flow is not destroyed and wherein the granules are still birefringent and there is evidence of a Maltere cross when the granular structure is viewed under polarized light, and
   b) at least one other conventional bakery product ingredient,
   wherein the composition is a gluten-free bakery product.
2. The composition of embodiment 1, wherein the heat moisture treated flour is selected from the group consisting of rice, tapioca, corn, potato, oat, amaranth, and sorghum heat moisture treated flours.
3. The composition of embodiment 1, wherein the heat moisture treated flour is a heat moisture treated rice flour.
4. The composition of embodiment 2 or 3, further comprising a heat-moisture treated or native tapioca flour.
5. The composition of embodiment 4, wherein the flour component consists essentially of
   a) a heat-moisture treated rice flour; and
   b) a heat-moisture treated or native tapioca flour.
6. The composition of embodiment 4, wherein the flour/starch component consists of
   a) a heat-moisture treated rice flour; and
   b) a heat-moisture treated or native tapioca flour.
7. The composition of any one of embodiments 1-6 wherein the flour component further comprises at least one starch selected from the group consisting of thermally inhibited starches and flours, inhibited potato starches, inhibited corn starches, inhibited tapioca starches, and cold water swellable starches.
8. The composition of embodiment 7, wherein the inhibited starch is thermally inhibited.
9. The composition of embodiment 7, wherein the inhibited starch is inhibited using OSA.
10. The composition of any one of embodiments 1-9, further comprising xanthan gum.
11. The composition of any one of embodiments 1-10, wherein the composition has a cohesiveness of at least 5.
12. The composition of any one of embodiments 1-11, wherein the composition has a graininess of less than 8.5.

### EXAMPLES

All parts and percentages are given by weight and all temperatures in degrees Celsius (°C) unless otherwise noted.

The following ingredients were used throughout the examples.
Viscosity modifier - NOVATION^{®} 4600 starch, a thermally inhibited starch commercially available from National Starch LLC (Bridgewater, NJ, USA)
Tapioca flour, commercially available from National Starch LLC (Bridgewater, NJ, USA)
Heat-moisture treated rice flour, prepared according to Example 1, and commercially available from National Starch LLC (Bridgewater, NJ, USA)
Hi-Maize^{®} 260 starch, a high amylose starch commercially available from National Starch LLC (Bridgewater, NJ, USA)
Thermally inhibited tapioca starch, commercially available from National Starch LLC (Bridgewater, NJ, USA)
Thermally inhibited potato starch, commercially available from National Starch LLC (Bridgewater, NJ, USA)
Thermally inhibited waxy corn starch, commercially available from National Starch LLC (Bridgewater, NJ, USA)
Instant PURE-FLO^{®} F starch, a cold water swellable starch commercially available from National Starch LLC (Bridgewater, NJ, USA)
Pregelatinized waxy corn starch, commercially available from National Starch LLC (Bridgewater, NJ, USA).
N-CREAMER™ 46 starch, an octenylsuccinic anhydride (OSA) substituted starch, commercially available from National Starch LLC (Bridgewater, NJ, USA).
Wheat flour, commercially available from a number of commercial sources.
Rice flour, commercially available from a number of commercial sources.

The following test procedures were used throughout the examples.
A. Cohesiveness: The cohesiveness of gluten free products is defined as the oral sensory perception of the degree to which the chewed product forms a ball or holds together into a bolus during the chewing process. It is measured by oral sensory analysis by trained experts who chew the food product being tested with the molar teeth and rate it on a 15-point scale in comparison to calibration samples. A higher number indicates more cohesiveness. The calibration samples consist of shoestring licorice candy with a score of 0, raw carrot with a score of 2, raw mushrooms with a score of 4, frankfurter with a score of 7.5, American cheese with a score of 9 and Fig Newtons with a score of 14.
B. Graininess: The graininess of gluten free products is defined as the oral sensory perception caused by the amount of roughness on the surface of the mass or bolus during the chewing process. It is measured by oral sensory analysis by trained experts who chew the food product 8-10 times and then feel the surface of the mass or bolus in their mouth, and rate it on a 15-point scale in comparison to calibration samples. A higher number indicates more graininess. The calibration samples consist of American cheese with a score of 3, Graham crackers with a score of 5, Melba toast with a score of 7.5, hard pretzel rod with a score of 10, raw carrot with a score of 12, and granola bar with a score of 15.
C. Amylose content by potentiometric titration
   0.5 g of a starch (1.0 g of a ground grain) sample was heated in 10mls of concentrated calcium chloride (about 30% by weight) to 95°C for 30 minutes. The sample was cooled to room temperature, diluted with 5 mls of a 2.5% uranyl acetate solution, mixed well, and centrifuged for 5 minutes at 2000 rpm. The sample was then filtered to give a clear solution.
   The starch concentration was determined polarimetrically using a 1 cm polarimetric cell. An aliquot of the sample (normally 5 mls) was then directly titrated with a standardized 0.01 N iodine solution while recording the potential using a platinum electrode with a KCI reference electrode. The amount of iodine needed to reach the inflection point was measured directly as bound iodine. The amount of amylose was calculated by assuming 1.0 gram of amylose will bind with 200 milligrams of iodine.
D. Preparation of cookies
   Combine dry ingredients except sugars. Cream butter and sugars in mixer with paddle. Add eggs and vanilla and mix until well blended. Add dry ingredients in two equal additions, mixing well after each. Mix in chocolate chips. Spoon approximately 30g portions on parchment-lined cookie sheet. Flatten each portion slightly. Bake for approximately 12 minutes at 190°C (pre-heated).
E. Preparation of muffins
   Combine dry ingredients except sugar and blueberries. Cream sugar and shortening on speed 2 of a Hobart mixer for 5 minutes. Add eggs and vanilla slowly while mixing on speed 1. Add combined dry ingredients in alternating additions with water on speed 1 over a period of 2 minutes. Add blueberries and mix in by hand. Scale at approximately 61 grams and bake in muffin tins for 20-21 minutes at 190°C.

### Example 1 - Preparation of heat-moisture treated rice flours (waxy, low amylose and regular)

This example shows a method for heat moisture treatment of flours.
A. A fine mist of water was sprayed on 1500 g of low amylose rice flour (LARF, amylose content-12%; RM100AR-lot #7519) while mixing it in a Kitchen Aid mixer at number 2-3 speed. The moisture of the flour was checked intermittently during the spraying by the Cenco moisture balance. The flour powder was adjusted to four different final moisture contents of 15, 20, 25, and 30%. It was further mixed for 1 hour to ensure moisture uniformity. About 200 grams of moist flour was then sealed in aluminum cans with less than 1 inch head space. The sealed aluminum cans were placed in ovens already at the desired temperatures of 100°C, and 120°C for the heat moisture treatment. There was a 30 minute ramp up time to allow the sample temperature inside the cans to equilibrate with the outside oven temperature. The sample was further held at that temperature for 2 hours. After the heat-moisture treatment, the cans were opened and the heat moisture treated (HMT) flours were air-dried at room temperature. The dry samples were ground to fine powder using a coffee grinder and sieved using a US mesh 20 screen (0.841 mm sieve opening). Samples were subsequently characterized for thermal and rheological properties.
B. Example 1A was repeated for waxy rice flour except that the moisture was adjusted to 25% and was then heat treated at 100°C.
C. Example 1A was repeated for regular rice flour except that the moisture was adjusted to 20% and was then heat treated at 100°C

### Example 2 - Preparation of gluten-free cookies

### Formulation A

Cookies were prepared from the following formulation.

| Ingredient | % of Dough |
|---|---|
| Heat-moisture treated rice flour | 6.70 |
| Tapioca flour | 15.64 |
| Viscosity modifier | 3.00 |
| Unsalted butter | 17.5 |
| Granulated sugar | 11.7 |
| Light brown sugar | 11.7 |
| Eggs | 9.4 |
| Vanilla | 0.4 |
| Salt | 0.4 |
| Baking soda | 0.3 |
| Xanthan Gum | 0.1 |
| Chocolate chips | 23.3 |

These cookies had a cohesiveness of 7 and a graininess score of 8.

### Formulation B

Cookies were prepared from the following formulation.

| Ingredient | % of Dough |
|---|---|
| Heat-moisture treated rice flour | 9.32 |
| Tapioca flour | 13.98 |
| Viscosity modifier | 3.04 |
| Unsalted butter | 17.5 |
| Light brown sugar | 11.7 |
| Invert sugar | 9.0 |
| Evaporated cane juice | 3.7 |
| Eggs | 8.4 |
| Vanilla | 0.4 |
| Salt | 0.4 |
| Baking soda | 0.3 |
| Xanthan Gum | 0.1 |
| Chocolate chips | 22.3 |

These cookies had a cohesiveness of 8 and a graininess score of 7.8.

### Formulation C - Comparative example - High Grittiness

Cookies were prepared from the following formulation.

| Ingredient | % of Dough |
|---|---|
| Heat-moisture treated rice flour | 3.8 |
| Tapioca flour | 4.7 |
| Rice flour | 14.7 |
| Viscosity modifier | 3.04 |
| Unsalted butter | 17.5 |
| Granulated sugar | 11.7 |
| Light brown sugar | 11.7 |
| Eggs | 9.4 |
| Vanilla | 0.4 |
| Salt | 0.4 |
| Baking soda | 0.3 |
| Xanthan Gum | 0.1 |
| Chocolate chips | 23.3 |

These cookies had a cohesiveness of mass score or 7.7 and a graininess score of 11.5 due to the high amount of native rice flour.

### Formulation D - Comparative example with rice flour as a bulking agent

Cookies were prepared from the following formulation.

| Ingredient | % of Dough |
|---|---|
| Heat-moisture treated rice flour | 10.14 |
| Rice flour | 2.53 |
| Thermally inhibited tapioca starch | 10.64 |
| Viscosity modifier | 2.03 |
| Unsalted butter | 17.5 |
| Light brown suqar | 11.7 |
| Invert sugar | 9.0 |
| Evaporated cane juice | 3.7 |
| Eggs | 8.4 |
| Vanilla | 0.4 |
| Salt | 0.4 |
| Baking soda | 0.3 |
| Xanthan Gum | 0.1 |
| Chocolate chips | 22.2 |

Cookies had a cohesiveness of mass score or 6.8 and a graininess score of 8.7. Bulking agent (rice flour) has a negative effect on the texture of the cookie.

### Formulation E - Comparative example

Cookies were prepared from the following formulation.

| Ingredient | % of Dough |
|---|---|
| Rice Flour | 23.30 |
| Viscosity modifier | 3.04 |
| Unsalted butter | 17.49 |
| Light brown sugar | 11.65 |
| Medium invert sugar | 9.00 |
| Evaporated cane juice | 3.66 |
| Eggs | 8.38 |
| Vanilla | 0.40 |
| Salt | 0.35 |
| Baking soda | 0.28 |
| Xanthan gum | 0.13 |
| Chocolate chips | 22.32 |

Cookies had a cohesiveness of mass score or 5 and a graininess score of 10 due to the high amount of native rice flour included and the lack of heat moisture treated flour.

### Formulation F- Comparative example containing wheat flour (gluten-containing)

Cookies were prepared from the following formulation.

| Ingredient | % of Dough |
|---|---|
| Wheat flour | 23.3 |
| Viscosity modifier | 3.04 |
| Unsalted butter | 17.5 |
| Light brown sugar | 11.7 |
| Invert sugar | 9.0 |
| Evaporated cane juice | 3.7 |
| Eggs | 8.4 |
| Vanilla | 0.4 |
| Salt | 0.4 |
| Bakinq soda | 0.3 |
| Xanthan Gum | 0.1 |
| Chocolate chips | 22.3 |

These cookies had a cohesiveness of 8.5 and a graininess score of 7.

### Example 3 - Preparation of muffins

### Formulation A

Muffins were prepared from the following formulation.

| Ingredients | % of Dough |
|---|---|
| Heat-moisture treated rice flour | 17.87 |
| Tapioca flour | 11.92 |
| Viscosity modifier | 0.89 |
| Granulated sugar | 17.40 |
| Baking powder | 1.28 |
| Baking soda | 0.29 |
| Salt | 0.21 |
| Buttermilk | 16.65 |
| Vegetable Oil | 11.96 |
| Eggs | 11.29 |
| Blueberries, IQF frozen | 9.53 |
| Vanilla | 0.57 |
| Xanthan Gum | 0.14 |

Muffins had a cohesiveness of 9 and a graininess score of 8.

### Formulation B

Muffins were prepared from the following formulation.

| Inqredients | % of Dough |
|---|---|
| Heat-moisture treated rice flour | 23.62 |
| Tapioca flour | 5.90 |
| Viscosity modifier | 0.89 |
| Granulated sugar | 17.25 |
| Baking powder | 1.27 |
| Baking soda | 0.29 |
| Salt | 0.21 |
| Buttermilk | 16.50 |
| Vegetable Oil | 11.85 |
| Eggs | 11.19 |
| Blueberries, IQF frozen | 9.44 |
| Vanilla | 0.57 |
| Xanthan Gum | 0.14 |
| Whey Protein Concentrate | 0.89 |

Muffins had a cohesiveness of 7 and a graininess score of 7.

### Formulation C

Muffins were prepared from the following formulation.

| Ingredients | % of Dough |
|---|---|
| Heat-moisture treated rice flour | 24.32 |
| Tapioca flour | 4.29 |
| Viscosity modifier | 0.86 |
| Thermally inhibited potato starch | 3.08 |
| Granulated sugar | 16.72 |
| Baking powder | 1.23 |
| Baking soda | 0.28 |
| Salt | 0.20 |
| Buttermilk | 15.99 |
| Shortening | 11.49 |
| Eggs | 10.85 |
| Blueberries, IQF frozen | 9.15 |
| Vanilla | 0.55 |
| Xanthan Gum Whey protein concentrate | 0.13 0.86 |

Muffins had a cohesiveness of mass score or 7 and a graininess score of 5.

### Formulation D

Muffins were prepared from the following formulation.

| Ingredients | % of Dough |
|---|---|
| Heat-moisture treated rice flour | 22.89 |
| Tapioca flour | 5.72 |
| Viscosity modifier | 0.86 |
| Thermally inhibited potato starch | 3.08 |
| Granulated suqar | 16.72 |
| Baking powder | 1.23 |
| Baking soda | 0.28 |
| Salt | 0.20 |
| Buttermilk | 15.99 |
| Shortening | 11.49 |
| Eggs | 10.85 |
| Blueberries, IQF frozen | 9.15 |
| Vanilla | 0.55 |
| Xanthan Gum | 0.13 |

Muffins had a cohesiveness of 7 and a graininess score of 5.

### Formulation E

Muffins were prepared from the following formulation.

| Ingredients | % of Dough |
|---|---|
| Heat-moisture treated rice flour | 12.25 |
| Tapioca flour | 7 |
| Rice flour | 7 |
| Thermally inhibited waxy corn starch | 8.05 |
| Instant PURE-FLO^{®} F starch | 0.7 |
| Granulated sugar | 17.45 |
| Baking powder | 1.09 |
| Salt | 0.24 |
| Milk | 18.88 |
| Butter | 13.65 |
| Eggs | 12.94 |
| Vanilla | 0.65 |
| Xanthan Gum | 0.10 |

Muffins had a cohesiveness of 9 and a graininess score of 6.5.

### Formulation G - Comparative example

Muffins were prepared from the following formulation.

| Ingredients | % of Dough |
|---|---|
| Rice flour | 22.89 |
| Tapioca flour | 5.72 |
| Viscosity modifier | 0.86 |
| Thermally treated potato starch | 3.08 |
| Granulated suqar | 16.72 |
| Baking powder | 1.23 |
| Baking soda | 0.28 |
| Salt | 0.20 |
| Buttermilk | 15.99 |
| Shortening | 11.49 |
| Eggs | 10.85 |
| Blueberries, IQF frozen | 9.15 |
| Vanilla | 0.55 |
| Xanthan Gum | 0.13 |
| Whey Protein Concentrate | 0.86 |

Muffins had a cohesiveness of 4 and a graininess score of 10.

### Formulation H- Comparative example containing wheat flour (gluten-containing)

Muffins were prepared from the following formulation.

| Ingredients | % of Dough |
|---|---|
| Wheat flour | 28.62 |
| Viscosity modifier | 0.86 |
| Thermally treated potato starch | 3.08 |
| Granulated sugar | 16.72 |
| Baking powder | 1.23 |
| Baking soda | 0.28 |
| Salt | 0.20 |
| Buttermilk | 15.99 |
| Shortening | 11.49 |
| Eggs | 10.85 |
| Blueberries, IQF frozen | 9.15 |
| Vanilla | 0.55 |
| Xanthan Gum | 0.13 |
| Whey Protein Concentrate | 0.86 |

These muffins had a cohesiveness of 8 and a graininess score of 5.

### Example 4 - Other gluten-free bakery products

This set of examples shows the utility of the invention in producing a variety of gluten-free products.

### Formulation A - Bread

The following test procedure was used to make bread.

Combine all dry ingredients including yeast and blend well in Hobart with paddle. Heat water to 46-49°C and combine with other room temperature liquid ingredients. Add the liquids to the dry blend and mix with paddle at speed 1 for 5 minutes. Scale into bread pans. Proof 45-70 min at 35-37°C. Bake in a rack oven for 1 hour at 163°C and 5 min. at 177°C.

Bread was prepared using the following formulation.

| Ingredients | % of Dough |
|---|---|
| Heat-moisture treated rice flour | 24.00 |
| Tapioca flour | 6.00 |
| Thermally inhibited tapioca starch | 10.00 |
| Thermally inhibited potato starch | 10.00 |
| Egg Whites | 9.43 |
| Eggs, whole | 10.52 |
| Honey, clover | 2.51 |
| Vegetable Oil | 2.32 |
| Apple cider vineqar | 0.58 |
| Water | 21.74 |
| Instant Yeast | 1.00 |
| Xanthan Gum | 0.75 |
| Salt | 1.00 |

### Formulation B - Pizza Dough

The following test procedure was used to make pizza dough.

Disperse yeast in warm water. Sift flour and salt into mixing bowl and while mixing on low add the olive oil and yeast/water mixture. Mix 1 minute on low speed in Hobart mixer, 3-4 min. on med-high speed or until dough is smooth and elastic. Place in well-oiled bowl and bulk ferment until double in size. Fold and form into individual balls to size. Form into a circular base of 1 cm thickness and spread layer of tomato sauce and cheese on base. Pre-heat oven to 175 degrees C. Bake pizza at 175 degrees C for 30 min. Remove from oven.

Pizza dough was prepared from the following formulation.

| Ingredients | % of Dough |
|---|---|
| Heat-moisture treated rice flour | 22.62 |
| Tapioca flour | 33.93 |
| Instant Yeast | 0.60 |
| Water | 39.80 |
| Salt | 0.91 |
| Olive Oil | 2.14 |

### Formulation C - Pancakes

The following test procedure was used to make pancakes.

Whisk to combine all dry ingredients. Whisk to combine all wet ingredients in a separate bowl.

Pour wets into dries, mix just until combined. Lightly oil a griddle. Heat griddle to 149°C. Pour batter onto griddle surface. Turn when bubbles begin to form on surface of pancake, about 3 minutes. Turn and cook about 2 minutes more. Remove from griddle.

### Formulation C1 -

Pancakes were prepared from the following formulation.

| Ingredients | % of Dough |
|---|---|
| Heat-moisture treated rice flour | 29.96 |
| Sugar, granulated | 2.63 |
| Baking Powder | 1.82 |
| Baking Soda | 0.61 |
| Salt | 0.40 |
| Buttermilk, organic | 48.38 |
| Butter, organic, melted | 6.48 |
| Vanilla Extract | 0.61 |
| Eggs | 9.11 |

### Formulation C2

Pancakes were prepared from the following formulation.

| Ingredients | % of Dough |
|---|---|
| Heat-moisture treated rice flour | 23.97 |
| Tapioca flour | 5.99 |
| Sugar, granulated | 2.63 |
| Baking Powder | 1.82 |
| Baking Soda | 0.61 |
| Salt | 0.40 |
| Buttermilk, organic | 48.38 |
| Butter, organic, melted | 6.48 |
| Vanilla Extract | 0.61 |
| Eggs | 9.11 |

### Formulation D - Brownies

The following test procedure was used to make brownies.

Grease and flour a 9x9 inch pan. Melt butter in microwave or in saucepan on stovetop. Transfer to mixer using the paddle to mix the cocoa with the butter until smooth. Mix in the sugar, eggs, coffee, and vanilla. Scrape down the sides and bottom of the bowl and mix again until smooth. Combine all of the dry ingredients. Add the dry ingredients to the wet ingredients and mix until fully blended. Transfer batter to pan. A 9x9 inch pan should hold about 1000 grams of batter. Bake for 20-25 minutes at 175°C, or until a toothpick comes out clean. Cool on wire rack and tip over to release from pan.

### Formulation D1

Brownies were prepared from the following formulation.

| Ingredient | % of Dough |
|---|---|
| Heat-moisture treated rice flour | 19.25 |
| Tapioca flour | 4.81 |
| Butter | 23.04 |
| Cocoa powder | 4.76 |
| Sugar | 33.46 |
| Eggs | 11.53 |
| Vanilla | 0.96 |
| Coffee, brewed | 1.63 |
| Baking powder | 0.220 |
| Salt | 0.34 |

### Formulation D2

Brownies were prepared from the following formulation.

| Ingredient | % of Dough |
|---|---|
| Heat-moisture treated rice flour | 24.06 |
| Butter | 23.04 |
| Cocoa powder | 4.76 |
| Suqar | 33.46 |
| Eggs | 11.53 |
| Vanilla | 0.96 |
| Coffee, brewed | 1.63 |
| Baking powder | 0.220 |
| Salt | 0.34 |

### Formulation E - Cake

The following test procedure was used to make a hi-ratio cake.

Sift together dry ingredients in part A. Mix A for 5 minutes at medium speed with paddle.

Add part B and mix 3 minutes at medium speed. Add part C in 2 stages blending well after each addition. Weigh 400g batter into 2 greased & floured 8 inch round cake pans.

Bake at 177°C for 18-22 minutes. Cool 15-20 minutes and remove from pan.

### Formulation E1.

A hi-ratio cake was prepared from the following formulation.

| Ingredient | % of Dough |
|---|---|
| A. | |
| Heat-moisture treated rice flour | 18.52 |
| Tapioca flour | 4.63 |
| Sugar | 27.66 |
| Emulsified shortening | 10.36 |
| Salt | 0.50 |
| Baking powder | 0.90 |
| Instant PURE-FLO^{®} F starch | 1.00 |
| Non-fat dry milk, Hi heat | 2.28 |
| Water | 9.22 |

| B. | |
|---|---|
| Water | 11.53 |

| C. | |
|---|---|
| Eggs | 12.68 |
| Vanilla | 0.72 |

### Formulation E2.

A hi-ratio cake was prepared from the following formulation.

| Ingredient | % of Dough |
|---|---|
| A. | |
| Heat-moisture treated rice flour | 23.15 |
| Sugar | 27.66 |
| Emulsified shortening | 10.36 |
| Salt | 0.50 |
| Baking powder | 0.90 |
| Instant PURE-FLO^{®} F starch | 1.00 |
| Non-fat dry milk, Hi heat | 2.28 |
| Water | 9.22 |

| B. | |
|---|---|
| Water | 11.53 |

| C. | |
|---|---|
| Eggs | 12.68 |
| Vanilla | 0.72 |

### Formulation F - Pie Crust

The following test procedure was used to make a pie crust.

Blend flours and salt. Add chilled shortening and cut in with 2 knives until like coarse meal. Add chilled water, a small amount at a time, and mix with fork until dough comes together.

Form ball and wrap in saran. Chill ball until 14-16°C. For 4 1/2 inch tart pans, scale top and bottom crusts at approx 120 g. With rolling pin, roll dough to 1/4 inch thick circle, or press dough by hand unto a ¼ thick circle. Place bottom crust in pan and trim. Fill with approx. 240 g pie filling. Top with crust, trim, and seal. Bake at 218°C for 30 minutes.

A pie crust was prepared from the following formulation.

| Ingredients | % of Dough |
|---|---|
| Heat-moisture treated rice flour | 21.52 |
| Tapioca flour | 32.28 |
| Salt | 0.82 |
| Shortening, chilled | 29.89 |
| Chilled Water | 15.49 |

### Formulation G - Snack cracker

The following test procedure was used to make a snack cracker.

Blend part A with paddle in a Hobart Mixer for 5 minutes at low speed. Make part B by dispersing sugar, dextrose, salt, and sodium bicarbonate in water with mixing for 3 minutes. Add B slowly to the dry blend; continue mixing for 3 minutes or until it forms a dough. By hand, make a dough sheet of approximately ½ inch thickness. Reduce the dough sheet to get final thickness of 0.7-0.8mm in three steps. First step: roller setting 1 mm. Second step: roller setting 0.7 mm. Third, final step: roller setting 0.3 mm. Cut with cracker die cutter and place pieces on a perforated baking pan. Bake in deck oven for 5-10 min at 177°C.

Snack crackers were prepared from the following formulation.

| Ingredients | % of Dough |
|---|---|
| A. | |
| Heat-moisture treated rice flour | 20.18 |
| Tapioca flour | 30.26 |
| Pregelatinzied waxy corn starch | 9.99 |
| Sucrose | 4.31 |
| Monocalcium Phosphate | 0.78 |
| Sodium Bicarbonate | 0.78 |
| Salt | 0.49 |
| Malted Barley Flour | 0.88 |

| B. | |
|---|---|
| Shortening | 7.54 |

| C. | |
|---|---|
| Water | 21.55 |
| High fructose corn syrup | 1.96 |
| Ammonium Bicarbonate | 1.27 |

### Formulation H

Cookies were prepared from the following formulation.

| Ingredient | % of Dough |
|---|---|
| Heat-moisture treated rice flour | 9.32 |
| Heat-moisture treated tapioca flour | 13.98 |
| Viscosity modifier | 3.04 |
| Unsalted butter | 17.5 |
| Light brown sugar | 11.7 |
| Invert sugar | 9.0 |
| Evaporated cane juice | 3.7 |
| Eggs | 8.4 |
| Vanilla | 0.4 |
| Salt | 0.4 |
| Baking soda | 0.3 |
| Xanthan Gum | 0.1 |
| Chocolate chips | 22.3 |

### Formulation I

Muffins were prepared from the following formulation.

| Ingredients | % of Dough |
|---|---|
| Heat-moisture treated rice flour | 22.89 |
| Heat-moisture treated tapioca flour | 5.72 |
| Viscosity modifier | 0.86 |
| Thermally treated potato starch | 3.08 |
| Granulated suqar | 16.72 |
| Baking powder | 1.23 |
| Baking soda | 0.28 |
| Salt | 0.20 |
| Buttermilk | 15.99 |
| Shortening | 11.49 |
| Eggs | 10.85 |
| Blueberries, IQF frozen | 9.15 |
| Vanilla | 0.55 |
| Xanthan Gum | 0.13 |
| Whey Protein Concentrate | 0.86 |

### Formulation J

Muffins were prepared from the following formulation.

| Ingredients | % of Dough |
|---|---|
| Heat-moisture treated rice flour | 22.89 |
| Tapioca flour | 5.72 |
| Viscosity modifier | 0.86 |
| Heat-moisture treated potato flour | 3.08 |
| Granulated sugar | 16.72 |
| Baking powder | 1.23 |
| Baking soda | 0.28 |
| Salt | 0.20 |
| Buttermilk | 15.99 |
| Shortening | 11.49 |
| Eggs | 10.85 |
| Blueberries, IQF frozen | 9.15 |
| Vanilla | 0.55 |
| Xanthan Gum | 0.13 |
| Whey Protein Concentrate | 0.86 |

### Formulation K

Muffins were prepared from the following formulation.

| Ingredients | % of Dough |
|---|---|
| Heat-moisture treated rice flour | 22.89 |
| Heat-moisture treated tapioca flour | 5.72 |
| Viscosity modifier | 0.86 |
| Heat-moisture treated potato flour | 3.08 |
| Granulated suqar | 16.72 |
| Baking powder | 1.23 |
| Baking soda | 0.28 |
| Salt | 0.20 |
| Buttermilk | 15.99 |
| Shortening | 11.49 |
| Eggs | 10.85 |
| Blueberries, IQF frozen | 9.15 |
| Vanilla | 0.55 |
| Xanthan Gum | 0.13 |
| Whey Protein Concentrate | 0.86 |

### Formulation L

Rolls were prepared from the following formulation.

| Ingredients | % of Dough |
|---|---|
| Heat-moisture treated rice flour | 23.21% |
| Heat-moisture treated tapioca flour | 5.80% |
| Novation™1900 starch | 10.66% |
| Whole eggs | 9.36% |
| Egg whites | 7.49% |
| Butter | 7.95% |
| Sugar | 3.59% |
| Whey protein concentrate, 34% | 2.81% |
| Instant yeast | 1.24% |
| Salt | 0.74% |
| Xanthan gum | 0.74% |
| Dextrose | 2.03% |
| Water | 23.16% |
| Baking Powder | 0.70% |
| Octenylsucuccinic anhydride substituted (OSA) starch | 0.50% |

## Claims

1. A composition comprising:
a. at least one heat-moisture treated flour, wherein the granular structure of the starch within the flour is not destroyed and wherein the granules are still birefringent and there is evidence of a Maltese cross when the granular structure is viewed under polarized light; and
b. at least one other conventional bakery product ingredient,
wherein the composition is a gluten-free bakery product.

2. The composition of claim 1, wherein the heat moisture treated flour is selected from the group consisting of rice, tapioca, corn, potato, oat, amaranth, and sorghum heat moisture treated flours.

3. The composition of claim 1, wherein the heat moisture treated flour is a heat moisture treated rice flour.

4. The composition of claim 2 or 3, further comprising a heat-moisture treated or native tapioca flour.

5. The composition of claim 4, wherein all the flow and the starch ingredients in the product consist essentially of
a. a heat-moisture treated rice flour; and
b. a heat-moisture treated or native tapioca flour.

6. The composition of any one of claims 1-5, wherein all the flow and the starch ingredients in the product further comprise at least one starch selected from the group consisting of thermally inhibited starches and flours, inhibited potato starches, inhibited corn starches, inhibited tapioca starches, and cold water swellable starches.

7. The composition of claim 6, wherein the inhibited potato starch is thermally inhibited.

## Patentansprüche

1. Zusammensetzung, die Folgendes aufweist:
a. zumindest ein mit Wärme-Feuchtigkeit behandeltes Mehl, wobei die körnige Struktur der Stärke im Mehl nicht zerstört ist und wobei die Körner noch doppeltbrechend sind und ein Malteserkreuz feststellbar ist, wenn die körnige Struktur unter polarisiertem Licht betrachtet wird; und
b. zumindest einen anderen herkömmlichen Bestandteil von Backwaren; wobei die Zusammensetzung eine glutenfreie Backware ist.

2. Zusammensetzung nach Anspruch 1,
wobei das mit Wärme-Feuchtigkeit behandelte Mehl aus der Gruppe ausgewählt ist, bestehend aus mit Wärme-Feuchtigkeit behandeltem Reis-, Maniokstärke-, Mais-, Kartoffel-, Hafer-, Amaranth- und Sorghummehl.

3. Zusammensetzung nach Anspruch 1,
wobei das mit Wärme-Feuchtigkeit behandelte Mehl mit Wärme-Feuchtigkeit behandeltes Reismehl ist.

4. Zusammensetzung nach Anspruch 2 oder 3,
die ferner ein mit Wärme-Feuchtigkeit behandeltes oder natürliches Maniokstärkemehl aufweist.

5. Zusammensetzung nach Anspruch 4,
wobei alle Mehl- und Stärkebestandteile im Produkt im Wesentlichen aus
a. mit Wärme-Feuchtigkeit behandeltem Reismehl und
b. mit Wärme-Feuchtigkeit behandeltem oder natürlichem Maniokstärkemehl bestehen.

6. Zusammensetzung nach einem der Ansprüche 1 bis 5,
wobei alle Mehl- und Stärkebestandteile im Produkt ferner zumindest eine Stärke inhibiert, die aus der Gruppe ausgewählt ist, bestehend aus thermisch inhibierten Stärken und Mehlen, inhibierten Kartoffelstärken, inhibierten Maisstärken, inhibierten Maniokstärken und mit kaltem Wasser quellbaren Stärken.

7. Zusammensetzung nach Anspruch 6,
wobei die inaktivierte Stärke thermisch inhibiert ist.

## Revendications

1. Composition comprenant :
a. au moins une farine traitée à la chaleur humide, dans laquelle la structure granulaire de l'amidon au sein de la farine n'est pas détruite et dans laquelle les granulés sont encore biréfringents et il est mis en évidence une croix de Malte lorsque la structure granulaire est visualisée sous lumière polarisée ; et
b. au moins un autre composant de produit de boulangerie traditionnel,
la composition étant un produit de boulangerie dépourvu de gluten.

2. Composition selon la revendication 1, dans laquelle la farine traitée à la chaleur humide est choisie dans le groupe constitué de farines traitées à la chaleur humide de riz, de tapioca, de maïs, de pomme de terre, d'avoine, d'amarante et de sorgho.

3. Composition selon la revendication 1, dans laquelle la farine traitée à la chaleur humide est une farine de riz traitée à la chaleur humide.

4. Composition selon la revendication 2 ou 3, comprenant en outre une farine de tapioca traitée à la chaleur humide ou native.

5. Composition selon la revendication 4, dans laquelle tous les ingrédients consistant en la farine et l'amidon dans le produit consistent essentiellement en :
a. une farine de riz traitée à la chaleur humide ; et
b. une farine de tapioca traitée à la chaleur humide ou native.

6. Composition selon l'une quelconque des revendications 1 à 5, dans laquelle tous les ingrédients consistant en la farine et l'amidon dans le produit comprennent en outre au moins un amidon choisi dans le groupe constitué d'amidons et de farines inhibés thermiquement, d'amidons de pomme de terre inhibés, d'amidons de maïs inhibés, d'amidons de tapioca inhibés et d'amidons pouvant gonfler à l'eau froide.

7. Composition selon la revendication 6, dans laquelle l'amidon de pomme de terre inhibé est inhibé thermiquement.
